# FASCICULE DE BREVET EUROPEEN

(11) **EP 3 495 195 B1**
(45) Date de publication et mention de la délivrance du brevet: **17.06.2020**
(21) Numéro de dépôt: 18211058.5
(22) Date de dépôt: 07.12.2018
(51) Int. Cl.: B60L 58/13, B60L 1/00

(54) **PROCÉDÉ ET SYSTÈME DE GESTION AUTOMATIQUE DE L'ÉNERGIE EMBARQUÉE PAR UN VÉHICULE ÉLECTRIQUE**
VERFAHREN UND SYSTEM ZUR AUTOMATISCHEN STEUERUNG DER DURCH EIN ELEKTROFAHRZEUG GELADENEN ENERGIE
METHOD AND SYSTEM FOR AUTOMATICALLY MANAGING ENERGY TAKEN ON BOARD BY AN ELECTRIC VEHICLE

(30) Priorité: 07.12.2017 FR 1761752
(43) Date de publication de la demande: 12.06.2019
(73) Titulaire: ALSTOM Transport Technologies, 93400 Saint-Ouen (FR)
(72) Inventeur: MAUNOURY, Patrice, 17000 La Rochelle (FR)
(74) Mandataire: Lavoix

(56) Documents cités:
- EP-A1- 2 849 312
- WO-A1-2010/043833
- DE-A1-102014 204 308
- GB-A- 2 483 454
- JP-A- 2012 139 026
- US-A1- 2013 166 123

## Description

La présente invention concerne un procédé et un système de gestion automatique de l'énergie embarquée à bord d'un véhicule électrique, en particulier un système de transport roulant à énergie embarquée, tel qu'un tramway, un bus, ou l'équivalent.

Les tramways ou les bus électriques sont actuellement conçus avec une énergie embarquée, stockée dans un système de stockage d'énergie adapté (tel que des batteries, des super-capacités, etc.) de manière à pouvoir circuler, en totale autonomie, sur une interstation, c'est-à-dire entre deux stations de recharge.

L'énergie embarquée par le système de stockage d'énergie est consommée soit sous forme d'énergie de traction (pour amener le tramway à une certaine vitesse, le maintenir à une vitesse de croisière, ou l'amener à une certaine altitude), soit sous forme d'énergie de confort (c'est-à-dire l'énergie utilisée par des dispositifs auxiliaires embarqués à bord du tramway et permettant d'assurer un certain niveau de confort aux passagers, par exemple des dispositifs d'éclairage, de chauffage, etc.)

Les systèmes de stockage d'énergie sont actuellement dimensionnés pour, en mode nominal, pouvoir transporter, avec un confort thermique normal, la charge maximale de passagers sur l'interstation de la ligne qui est la plus pénalisante en terme d'énergie de traction ; et, en mode dégradé (correspondant à une panne d'une station de recharge), pouvoir transporter, avec un confort thermique réduit, la charge maximale de passagers sur deux interstations successives sans recharger le système de stockage à la station de recharge intermédiaire.

Par exemple, le système de stockage d'énergie d'un tramway peut stocker une énergie maximale de 13,5 kWh.

Les systèmes de transport roulant à énergie électrique embarquée présentent de nombreux avantages (moins d'infrastructure au sol dans le ferroviaire, capacité de récupération de l'énergie de freinage,...), mais présentent un risque spécifique de défaillance par épuisement de l'énergie embarquée avant de rallier une station de recharge, autrement dit un risque de « panne sèche ».

Actuellement, des stratégies de délestage de l'énergie de confort et/ou de l'énergie de traction sont mises en œuvre pour préserver l'autonomie du véhicule électrique lorsque l'énergie embarquée restante dans le système de stockage d'énergie passe au-dessous d'un seuil critique prédéfini.

Ces stratégies sont prédéterminées. Elles manquent donc de robustesse, dans la mesure où elles n'intègrent pas les aléas inhérents à l'exploitation, tels que des ralentissements du trafic, voire des arrêts intempestifs (à des passages piétons ou des carrefours par exemple). Ces stratégies prédéterminées peuvent donc être mises en défaut en conditions usuelles d'exploitation.

De plus, ces stratégies sont définies sur des pires cas, ce qui peut conduire à leur mise en œuvre en l'absence de besoin réel, alors que les conditions d'exploitation (charge passagers, conditions climatiques, etc.) ne sont pas les plus pénalisantes.

Par ailleurs, pour le cas de voitures électriques, on connaît le document WO 2010/043833 A1 qui divulgue un procédé d'estimation de l'autonomie permettant de prédire la consommation d'énergie du véhicule sur un itinéraire restant à parcourir ; le document US2013/166123 A1, qui estime la distance maximale que la voiture peut encore parcourir compte tenu de l'énergie embarquée et de l'énergie prévisionnelle, cette dernière étant évaluée à partir uniquement de grandeurs courantes (vitesse instantanée du véhicule et puissance instantanée des auxiliaires) ; le document EP 2 849 312 A1, qui divulgue un système pour optimiser le transfert d'énergie d'une station de recharge vers un véhicule électrique dans le but d'augmenter la durée de vie des batteries du véhicule ; et le document GB 2 483 454, qui divulgue la détermination de la position courante, la saisie d'une proposition de destination et le calcul d'une route reliant ces points, la route calculée permettant ensuite l'évaluation des besoins énergétiques du véhicule.

Le but de l'invention est donc de résoudre ce problème, en proposant notamment un système et un procédé propres à gérer la consommation d'énergie du système de transport, en particulier en ajustant sa vitesse, pour anticiper et en éviter la survenue d'une telle situation critique, et permettre de rejoindre la prochaine station de recharge en autonomie, à la fois le plus rapidement possible et dans les meilleures conditions de confort pour les passagers.

Pour cela l'invention a pour objet un procédé de gestion automatique de l'énergie embarquée par un tramway et un système de gestion automatique de l'énergie embarquée par un tramway selon les revendications annexées.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
- La figure 1 est une représentation schématique du système selon l'invention équipant un tramway ;
- la figure 2 représente, sous forme de blocs, le procédé selon l'invention mis en œuvre par le système de la figure 1 ;
- La figure 3 représente un affichage possible en cabine des informations pertinentes délivrées au cours de la mise en œuvre du procédé de la figure 2 ; et,
- La figure 4 représente, pour le calcul d'un optimum vitesse - puissance auxiliaire, différentes courbes de référence dans un repère énergie prévisionnelle totale versus vitesse de consigne.

Le procédé de gestion automatique de l'énergie embarquée par un véhicule électrique afin de garantir l'accomplissement de sa mission s'appuie sur le calcul d'une énergie prévisionnelle totale, notée Eₘᵢₛ₋ₚᵣₑᵥ, définie comme une estimation de l'énergie qu'il sera nécessaire de fournir pour finir la mission. Cette estimation est faite depuis la position courante du véhicule et est mise à jour périodiquement au cours du déplacement du véhicule.

Alors que la mission d'un véhicule consiste à transporter des passagers sur une interstation, depuis une station de recharge de départ jusqu'à une station de recharge d'arrivée, on entend par « finir sa mission », la capacité du véhicule à rejoindre la station de recharge d'arrivée, soit selon un mode de fonctionnement nominal, consistant à atteindre la station d'arrivée dans un temps imparti et avec un niveau de confort passager prédéfini, soit selon un mode de fonctionnement dégradé, consistant à atteindre la station d'arrivée dans un temps plus long et/ou un confort passager réduit.

L'énergie prévisionnelle totale Eₘᵢₛ₋ₚᵣₑᵥ est alors comparée périodiquement à une énergie disponible embarquée E_{emb-dis}, qui correspond à une énergie embarquée E_{emb} de laquelle est soustraite une énergie de réserve Eᵣₑₛ. L'énergie embarquée E_{emb} est l'énergie stockée dans le système de stockage d'énergie du véhicule électrique, avantageusement réévaluée périodiquement en fonction de l'avancée du véhicule et du temps écoulé depuis le départ. L'énergie de réserve Eᵣₑₛ correspond à l'énergie permettant de franchir l'interstation suivante en cas de dysfonctionnement du système de recharge de la station d'arrivée.

La comparaison de ces deux énergies, Eₘᵢₛ₋ₚᵣₑᵥ et E_{emb-dis}, permet d'évaluer périodiquement l'autonomie du véhicule électrique, c'est-à-dire sa capacité à finir sa mission. Cela permet de gérer la consommation énergétique du véhicule électrique de manière adaptée, notamment en ajustant la vitesse de déplacement du véhicule électrique et/ou la puissance auxiliaire d'alimentation des dispositifs auxiliaires.

En particulier, lorsque l'énergie prévisionnelle totale Eₘᵢₛ₋ₚᵣₑᵥ dépasse l'énergie disponible embarquée E_{emb-dis}, le procédé prévoit avantageusement la détermination automatique d'un point de fonctionnement optimal en termes de vitesse - puissance auxiliaire. Ce point de fonctionnement optimal est proposé au conducteur ou automatiquement appliqué en tant que consignes au système de régulation de la vitesse et/ou le système de régulation de la puissance auxiliaire.

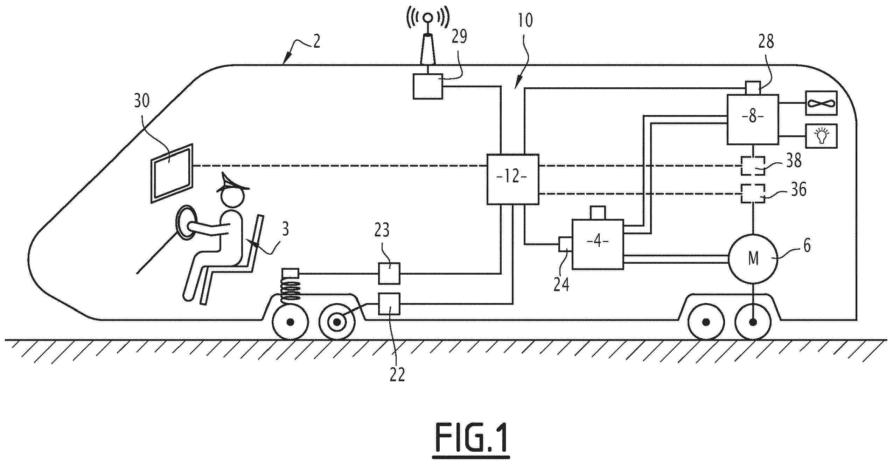

Dans ce qui suit, comme représenté à la figure 1, l'invention sera plus particulièrement décrite pour un véhicule électrique du type tramway 2, équipé d'un système de stockage d'énergie, par exemple des batteries 4. En variante d'autres types de système de stockage sont envisageables, en particulier des super-capacités.

Les batteries 4 permettent d'alimenter en puissance électrique un moteur de traction 6, ainsi qu'un convertisseur 8 d'alimentation des dispositifs auxiliaires.

Le tramway 2 est équipé d'un système 10 propre à mettre en œuvre le procédé de gestion automatique de l'énergie embarquée selon l'invention.

Le système 10 comporte un calculateur 12, qui est un ordinateur propre à exécuter les instructions d'un programme d'ordinateur.

A partir de données d'entrée brutes qu'il reçoit sur son interface d'entrée/sortie depuis divers périphériques, le calculateur 12 est propre à calculer différentes données d'entrée du procédé selon l'invention. Ces données d'entrée sont par exemple et de préférence :
- l'énergie embarquée E_{emb}, qui correspond à l'énergie stockée par les batteries 4 à l'instant courant ;
- la position X du tramway le long de l'interstation considérée ;
- la vitesse V du tramway ;
- la masse M du tramway ;
- la puissance auxiliaire Pₐᵤₓ d'alimentation des dispositifs auxiliaires à l'instant courant ;
- la localisation de l'interstation courante.

Plus précisément, l'énergie embarquée E_{emb} est par exemple mesurée au moyen d'un capteur 24 adapté associé aux batteries 4.

La position X est la position instantanée du tramway 2 entre les deux stations de départ et d'arrivée définissant les extrémités de l'interstation. Elle correspond à la distance parcourue depuis la station de départ. La position X est déterminée par exemple à partir de moyens odométriques 22 équipant le tramway 2, en particulier une roue phonique permettant de mesurer la distance parcourue depuis la station de départ, prise comme origine.

La vitesse courante V est la moyenne sur quelques secondes, par exemple trois secondes, de la vitesse instantanée fournie par exemple pas les moyens odométriques 22, en particulier un tachymètre propre à mesurer la vitesse instantanée du tramway 2.

La masse M est par exemple la valeur fournie au moment où le tramway quitte la station de départ par le sous-système de freinage 23 du tramway 2, qui est propre à déterminer la masse à partir des signaux délivrés par des capteurs de charge adapté. La masse M tient donc compte du nombre de passagers à bord du tramway 2.

La puissance auxiliaire Pₐᵤₓ est par exemple déterminée par la valeur maximale, sur une fenêtre de quelques minutes, par exemple six minutes (temps caractéristique de cyclage des dispositifs auxiliaires de climatisation), de la moyenne sur quelques secondes, par exemple dix secondes, de la puissance auxiliaire instantanée consommée à l'instant considéré par l'ensemble des dispositifs auxiliaires embarqués à bord du tramway, en particulier les dispositifs d'air conditionné et de chauffage des voitures du tramway pour le confort des passagers. La puissance auxiliaire instantanée est par exemple mesurée par un capteur de puissance adapté 28 équipant le convertisseur 8.

La localisation de l'interstation courante est obtenue par l'interrogation d'un système de contrôle au sol par le calculateur 12 au moment de l'arrêt en station. Ceci s'effectue via par exemple une liaison sans fil établie par un module radiocommunication 29 équipant le tramway 2.

La localisation ainsi obtenue permet l'interrogation par le calculateur 12 d'une base de données embarquée à bord du tramway, pour déterminer les caractéristiques de la mission sur l'interstation courante.

Il s'agit en particulier de la distance D séparant les stations d'extrémité de l'interstation, de vitesses de référence Vref-i sur chaque tronçon (indexé par l'entier i) des différents tronçons subdivisant l'interstation, et d'un profil d'altitude. Le profil d'altitude est par exemple un diagramme discrétisé de l'altitude Z en fonction de la positon X, ne comportant de préférence que les points de début de changement de pente et de fin de changement de pente.

Ces caractéristiques comportent également l'énergie de réserve Eᵣₑₛ à prévoir pour, en cas de dysfonctionnement du système de recharge de la station d'arrivée, permettre au tramway de rejoindre la station de recharge suivante.

Le système délivre en sortie une pluralité de données de sortie, telles que par exemple et de préférence :
- une énergie prévisionnelle totale Eₘᵢₛ₋ₚᵣₑᵥ(X) alors que le tramway se trouve à la position X, correspondant à une estimation de l'énergie qu'il est prévu de consommer pour finir la mission depuis la position X ;
- une énergie embarquée disponible E_{emb-dis}(X), résultant de la différence entre l'énergie embarquée E_{emb}(X) et l'énergie de réserve Eᵣₑₛ ;
- un diagnostic en temps réel sur la capacité à finir la mission, fondé sur la comparaison entre l'énergie prévisionnelle totale Eₘᵢₛ₋ₚᵣₑᵥ(X) et l'énergie embarquée disponible Eemb-dis(X) ;
- une consigne de puissance auxiliaire Paux* ;
- une consigne de vitesse V*.

Tout ou partie des données de sortie sont affichées sur un écran 30 situé en cabine afin d'informer le conducteur 3 du tramway et l'aider à réaliser les actions adaptées. De préférence, tout ou partie des données de sortie sont transmises à un module de contrôle 36 du moteur de traction 6 et/ou à un module de contrôle 38 du convertisseur 8.

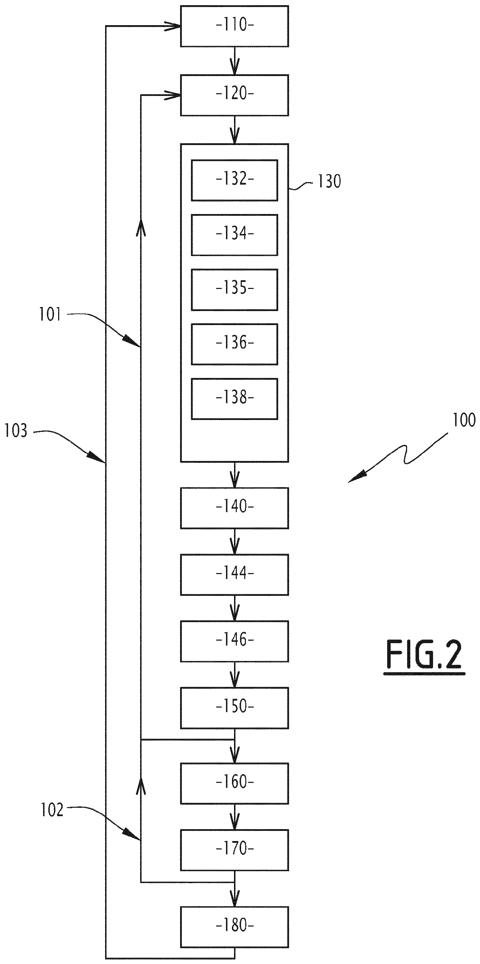

Le procédé 100 de gestion automatique de l'énergie embarquée va maintenant être décrit en référence à la figure 2.

A l'étape 110, alors que le tramway 2 est arrêté à la station de départ, il collecte les caractéristiques de la mission sur l'interstation. Les caractéristiques de l'interstation sont communiquées au calculateur 12 via la liaison sol-bord et le module de radiocommunication 29.

Puis, alors que le tramway 2 se déplace sur l'interstation entre les stations de départ et d'arrivée, les étapes suivantes sont périodiquement itérées.

A l'étape 120, le calculateur 12 détermine la position X par rapport à la station de départ et mesure le temps t écoulé depuis le départ de la station de départ.

A l'étape 130, le calculateur 12 estime une puissance auxiliaire Pₐᵤₓ, une vitesse de croisière Vcrois-i pour chaque tronçon i sur la fin de l'interstation, et un temps T pour terminer la mission et rejoindre la station d'arrivée.

Par exemple, à l'étape 132, le calculateur 12 détermine la puissance auxiliaire Pₐᵤₓ à partir de la mesure délivrée par le capteur 28, comme indiqué ci-dessus.

A l'étape 134, le calculateur 12 détermine la vitesse V à partir de la mesure délivré par le système 22, comme indiqué ci-dessus.

A l'étape 135, il compare la vitesse V déterminée à l'instant courant à la vitesse de référence Vref pour le tronçon de l'intersection sur lequel le tramway est engagé.

Il interprète un écart faible entre la vitesse V et la vitesse de référence Vref-i sur le tronçon actuel i comme une petite perturbation et anticipe un retour imminent de la vitesse V à la vitesse de référence Vref-i. La vitesse de croisière Vcrois-i est donc prise égale à la vitesse Vref-i, non seulement sur le tronçon actuel i mais également sur les tronçons suivants, i+1, I+2, etc.

Il interprète un écart important entre la vitesse V et la vitesse de référence Vref comme le signe d'une circulation perturbée par un aléa et anticipe la poursuite du déplacement du tramway à cette vitesse V réduite sur la fin du tronçon. La vitesse de croisière Vc est donc prise égale à la vitesse V.

Enfin, si la vitesse V est nulle, on prévoit avantageusement d'utiliser, durant le redémarrage du tramway après l'arrêt, une vitesse de croisière égale à la vitesse de croisière avant l'arrêt.

Plus précisément, le calculateur 12 peut avantageusement gérer un arrêt imprévu (par exemple à un passage piétons ou à un carrefour). Pour ce faire, le calculateur 12 mémorise alors la vitesse de croisière avant l'arrêt et anticipe un redémarrage à cette vitesse de croisière. Ainsi, lorsque le tramway redémarre, la vitesse de croisière mémorisée est prise en compte pendant une durée prédéterminée pour la mise en œuvre du procédé, qui peut être fonction du temps d'accélération nécessaire pour atteindre cette vitesse de croisière. Une fois le redémarrage terminé, le système 10 se base à nouveau sur la vitesse V mesurée pour prévoir une nouvelle vitesse de croisière. De cette manière, durant la phase d'accélération, il est possible d'obtenir une évaluation raisonnable de l'énergie cinétique nécessaire à la fin de la mission, la vitesse de croisière utilisée étant a priori la vitesse de référence et non pas la vitesse faible du tramway au moment où il quitte l'arrêt.

A l'étape 136, le calculateur 12 s'appuie sur les résultats de l'étape 135 pour prévoir les vitesses de croisières Vcrois-i sur les tronçons suivants de l'interstation, jusqu'à la station d'arrivée.

Si à l'étape 135, un écart faible a été constaté, le calculateur 12 considère que, sur les tronçons i suivants, la vitesse de consigne Vci du tramway sera la vitesse de référence Vrefi associée à chacun de ces tronçons.

Si en revanche, à l'étape 135, un écart important a été constaté, le calculateur 12 considère que, sur les tronçons i suivants, la vitesse de croisière Vcrois-i initialement prévue sera réduite par rapport à la vitesse de référence Vref-i associée à chacun de ces tronçons suivants.

A l'étape 138, le calculateur 12 utilise les vitesses de croisière Vci sur le tronçon courant et les tronçons suivants, ainsi que les longueurs de ces tronçons pour prévoir la durée T de la mission.

Puis, à l'étape 140, le calculateur 12 estime l'énergie prévisionnelle totale Eₘᵢₛ₋ₚᵣₑᵥ(X0), qui est l'énergie qu'il faut prévoir de devoir consommer pour terminer la mission, alors que le tramway se trouve à la position X0.

L'énergie prévisionnelle totale Eₘᵢₛ₋ₚᵣₑᵥ est calculée comme la somme d'une énergie de traction Etrac et d'une énergie auxiliaire Eaux.

L'énergie de traction comporte une composante d'énergie cinétique Ecin (correspondant à l'énergie de traction à fournir pour amener le véhicule à une certaine vitesse), une composante potentielle Epot (correspondant à l'énergie à fournir pour amener le véhicule à une certaine altitude) et une composante de frottement Efrot (correspondant à l'énergie à fournir pour vaincre la résistance à l'avancement).

L'énergie auxiliaire correspond à l'énergie à fournir aux dispositifs auxiliaires de confort passager.

Pour ces estimations, le calculateur 12 utilise les résultats de l'étape 130 (Paux, Vcrois-1, Vcrois-2, Vcrois-3,... et T) et de l'étape 120 (X, t) ainsi que les caractéristiques de l'interstation (longueur de l'interstation, profil d'altitude).

Par exemple, l'énergie cinétique prévisionnelle est calculée avec la masse du véhicule et les vitesses de croisière Vcrois-i prévue pour finir la mission. En outre, ce calcul intègre les écarts de vitesse entre les différents tronçons et les phases de traction lors d'une accélération, ou de freinage lors d'une décélération (avantageusement avec récupération de l'énergie de freinage). Ce calcul de l'énergie cinétique prévisionnelle distingue par un signe négatif ou positif les contributions de ces phases, considère un rendement de la traction et un rendement du freinage en cas de freinage électrique. Avantageusement, est pris en compte l'absence de récupération en freinage en dessous d'une vitesse seuil, qui vaut par exemple 13 km/h, seuil en dessous duquel le freinage est mécanique par nécessité et non plus électrique.

Par exemple, la durée T prévue pour la fin de la mission multipliée par la puissance auxiliaire Pₐᵤₓ permet d'obtenir l'énergie auxiliaire prévisionnelle à fournir pour finir la mission.

Par exemple encore, l'énergie de frottement est prise en compte sous forme d'un forfait par interstation et alloué au prorata en fonction de l'avancement. Cette simplification est compatible avec la précision nécessaire dans le cas des tramways. La composante de frottement peut être calculée avec un modèle plus spécifique de résistance à l'avancement pour tout système de transport à énergie embarquée.

L'énergie prévisionnelle totale Eₘᵢₛ₋ₚᵣₑᵥ calculée au point X0 est celle nécessaire à la fin de la mission. Elle est mise à jour périodiquement pour tenir compte de l'avancée du véhicule. A chaque mise à jour, elle est comparée directement à l'énergie embarquée disponible E_{emb-dis}, qui est également mise à jour périodiquement pour prendre en compte l'énergie effectivement consommée pour arriver au point courant. Ce mécanisme de calcul et de comparaison recale naturellement l'énergie totale nécessaire à la mission comme la somme de l'énergie qui a déjà été consommée et de l'énergie restant à fournir pour finir la mission.

En variante, l'étape 140 est inhibée dans les cinq à dix premières secondes qui suivent un démarrage, le temps de laisser le tramway accélérer pour atteindre une vitesse stabilisée pouvant être prise comme une vitesse de croisière. Ceci permet de limiter le risque d'une surévaluation de l'énergie prévisionnelle totale Eₘᵢₛ₋ₚᵣₑᵥ(X).

Avantageusement, le calculateur 12 intègre à chacune des estimations énergétiques des rendements énergétiques adaptés. Par exemple, pour fournir une énergie cinétique utile de 1 kWh, il sera nécessaire que le moteur 6 consomme une énergie de 1,08 kWh, en tenant compte d'un rendement de traction de 0,82, ce qui correspond à une énergie embarquée de 1,13 kWh, dans le cas d'un rendement électrique de 0,95 des batteries 4.

Si les pertes électriques sont prises en compte de cette façon, les pertes mécaniques sont prises en compte au travers de l'énergie de frottement qui englobe toutes les formes de résistance mécanique et aérodynamique à l'avancement du tramway.

On considère des rendements fixes pour chaque type de transformation d'énergie, ce qui est compatible avec la précision nécessaire de prévision des énergies nécessaire pour établir une prévision sur la fin de la mission.

Le procédé 100 comporte une étape 144 de détermination de l'énergie disponible embarquée E_{emb-dis} (X). Cette énergie est la différence entre l'énergie embarquée E_{emb}(X) et l'énergie de réserve Eᵣₑₛ.

L'énergie embarquée E_{emb}(X) est de préférence mise à jour périodiquement. Elle provient de la mesure délivrée par le capteur 24 à l'instant courant. En variante, elle peut être reconstituée par calcul en fonction de l'avancée le long de l'interstation.

La condition d'autonomie du tramway étant généralement définie sur deux interstations successives, une énergie de réserve Eᵣₑₛ est réservée pour permettre un redémarrage de la station d'arrivée et la poursuite exceptionnelle du déplacement du tramway sans recharge à la station d'arrivée, jusqu'à la prochaine station de recharge. Ainsi, le tramway 2 sera capable d'enchaîner deux interstations sans recharge, en cas de panne complète de la recharge à la station d'arrivée. Cela signifie que le tramway doit atteindre la station d'arrivée sans avoir consommée cette énergie de réserve.

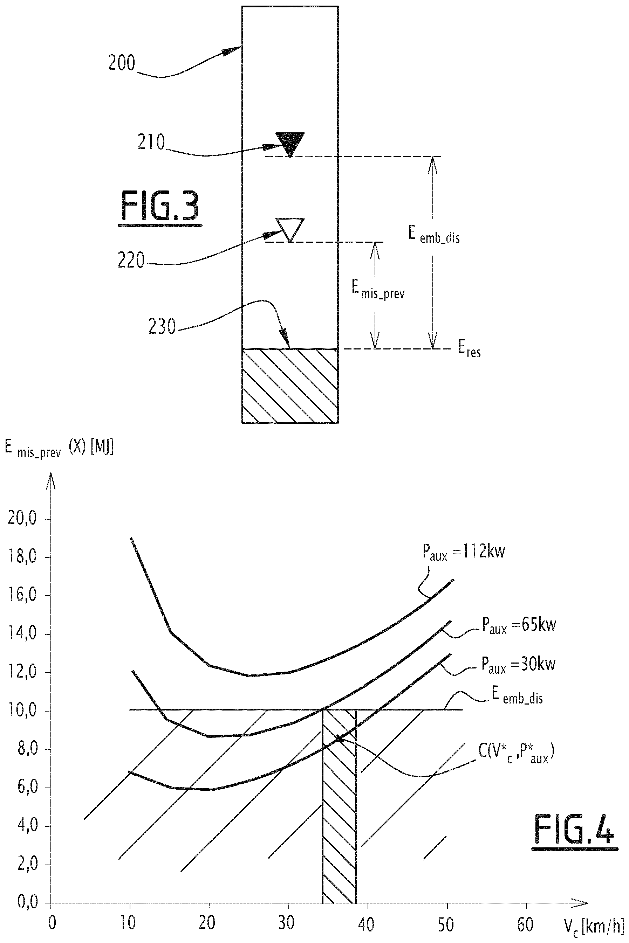

A l'étape 146, les informations venant d'être calculées sont affichées en cabine sur l'écran 30. Par exemple, comme illustré sur la figure 3, l'écran affiche une jauge 200 indiquant, par un premier symbole mobile 210, l'énergie prévisionnelle totale Eₘᵢₛ₋ₚᵣₑᵥ(X) et, par un second symbole 220, l'énergie disponible embarquée E_{emb-dis}(X), par rapport au niveau 230 de l'énergie de réserve Eᵣₑₛ.

A l'étape 150, le calculateur 12 établit un diagnostic énergétique par comparaison entre l'énergie prévisionnelle totale Eₘᵢₛ₋ₚᵣₑᵥ(X) et l'énergie disponible embarquée E_{emb-dis}(X).

Si l'énergie disponible embarquée E_{emb-dis}(X) est supérieure à l'énergie nécessaire à la fin de la mission Eₘᵢₛ₋ₚᵣₑᵥ(X), cela signifie que les batteries 4 stockent suffisamment d'énergie pour finir la mission, avec le régime courant en termes de vitesse de croisière et de puissance auxiliaire.

Les étapes 120 à 146 sont itérées (boucle 101) conduisant à la mise à jour des Valeurs de Eₘᵢₛ₋ₚᵣₑᵥ(X) et E_{emb-dis}(X).

Si l'énergie embarquée disponible totale Eₘᵢₛ₋ₚᵣₑᵥ(X) est inférieure ou égale à l'énergie nécessaire à la fin de la mission prévisionnelle totale Eₘᵢₛ₋ₚᵣₑᵥ(X), cela signifie que l'énergie stockée par les batteries 4 est insuffisante pour finir la mission avec le régime courant.

Ainsi dans le cas d'un diagnostic indicatif d'un manque d'autonomie, le procédé 100 se poursuit par une étape 160 d'identification d'un couple vitesse - puissance auxiliaire permettant de finir la mission.

Au cours de l'étape 160, le calculateur 12 met en œuvre un algorithme d'optimisation permettant d'identifier, en temps réel, un optimum vitesse - puissance auxiliaire.

Cet optimum est un compromis. En effet une vitesse de croisière plus élevée réclame plus d'énergie de traction pour atteindre cette vitesse, mais économise de l'énergie de confort en raccourcissant la durée de la fin de l'interstation et par conséquent le temps d'utilisation des dispositifs auxiliaires. Inversement, une vitesse de croisière plus faible réclame moins d'énergie de traction, mais augmente la durée pour rejoindre la station d'arrivée et donc plus d'énergie de confort, à moins de réduire la puissance auxiliaire.

Dans le mode de réalisation actuellement envisagé, les contraintes suivantes sont successivement mise en œuvre :
La première contrainte est de faire en sorte que le tramway accomplisse sa mission de transport des passagers, en rejoignant la station d'arrivée. Il faut donc que l'énergie prévisionnelle totale soit inférieure à l'énergie disponible.

La seconde contrainte est de faire en sorte que la mission soit faite dans le temps imparti, par exemple conformément à une table horaire de circulation du tramway. Ainsi, une réduction de la vitesse de croisière sera préconisée uniquement lorsque cela est obligatoire. Autrement dit, il est prévu de commencer par réduire l'énergie auxiliaire et de ne réduire l'énergie de traction que si la réduction de l'énergie auxiliaire ne permet pas de finir la mission.

La troisième contrainte est de réduire l'énergie auxiliaire d'une manière visant à limiter l'impact sur le confort thermique et visuel ressenti par les passagers. Ainsi, un délestage des dispositifs auxiliaires n'est préconisé que lorsque cela devient obligatoire pour économiser l'énergie embarquée afin de regagner en autonomie la station d'arrivée.

Le point de fonctionnement optimum qui permet de rallier la station d'arrivée le plus rapidement possible et dans le meilleur confort possible est sélectionné.

Dans un mode de réalisation possible, différentes courbes de références sont d'abord calculées, telles que celles représentées sur la figure 4. Chaque courbe donne l'énergie prévisionnelle totale Eₘᵢₛ₋ₚᵣₑᵥ(X) en fonction de la vitesse de consigne Vc pour une valeur donnée de la puissance auxiliaire Pₐᵤₓ. Ces courbes sont obtenues par des calculs similaires à ceux présentés ci-dessus pour estimer l'énergie prévisionnelle totale.

Puis, de façon itérative, une énergie prévisionnelle totale est calculée avec une puissance auxiliaire d'un niveau inférieur au niveau courant. Pour ce faire, le calculateur dispose d'une table de délestage indiquant les différents niveaux discrets de puissance auxiliaire, entre une puissance nominale et une puissance minimale.

Si cette réduction de puissance auxiliaire permet un nouveau diagnostic énergétique positif alors le calculateur 12 sort de l'étape 160.

Si au contraire ce n'est pas le cas, l'itération suivante du calcul de l'énergie prévisionnelle totale est faite avec une vitesse de croisière réduite d'un incrément de 5 km/h, par exemple.

Si cette réduction de la vitesse de croisière permet un nouveau diagnostic énergétique positif, le calculateur sort de l'étape 160.

Si au contraire ce n'est pas le cas, le calcul est itérée.

Suivant le poids des contraintes décrites précédemment, on peut enchaîner deux ou trois pas du calcul en diminuant le niveau de puissance auxiliaire avant d'enclencher un pas de réduction de la vitesse de croisière.

Ainsi, sur la figure 4, pour arriver à la prochaine station, l'optimum doit conduire à une énergie prévisionnelle totale inférieure à l'énergie disponible (première contrainte). Si l'énergie E_{emb-disp} est de 10 MJ, cette énergie ne permet pas de rallier la station suivante avec la puissance auxiliaire maximale de 112 kW, quelle que soit la vitesse ; elle le permet avec une puissance auxiliaire réduite à 65 kW pour une plage de vitesse entre 35 et 13 km/h, ou avec une puissance auxiliaire réduite à 30 kW pour une plage de vitesse entre 43 et 10 km/h. Si l'heure d'arrivée à la station d'arrivée impose une vitesse de croisière optimale de 37 km/h (seconde contrainte), alors il faut que la puissance auxiliaire soit établie à 30 kW (troisième contrainte).

Un optimum C(V_{c}*, Pₐᵤₓ*) est ainsi déterminé en sortie de l'étape 160.

Cet optimum correspond à des consignes de vitesse V_{c}* et de puissance auxiliaire Pₐᵤₓ*.

A l'étape 170, ces consignes sont affichées en tant que préconisations sur l'écran 30 pour informer le conducteur 3. Le conducteur réalise les actions préconisées s'il le souhaite, notamment en prenant en compte d'autres paramètres d'exploitation de son véhicule.

En variante, ces consignes sont transmises à des systèmes adaptés du tramway pour une prise en compte automatique.

Ainsi, un module de contrôle 36 peut filtrer les commandes d'accélérations du conducteur et limiter sa vitesse à la consigne de vitesse ou lui recommander d'accélérer si sa vitesse est trop faible. En variante, le module de contrôle 36 régule directement le moteur à partir de la consigne de vitesse V_{c}* pour modifier la vitesse instantanée du tramway. Un module de contrôle de gestion des dispositifs auxiliaires régulera la puissance instantanée d'alimentation de ces dispositifs à partir de la consigne de puissance auxiliaire Pₐᵤₓ*, notamment en envoyant des consigne de limitations de la puissance aux différents dispositifs auxiliaires, pouvant aller jusqu'à une consigne d'arrêt.

Ces consignes sont actualisées en temps réel en fonction de l'avancée du train. Pour cela les étapes 120 à 170 du procédé sont itérées (boucle 102).

A l'étape 180, le calculateur 12 détecte avantageusement l'arrivée en station grâce au suivi de son avancée le long de l'interstation et à la détection d'une vitesse nulle.

Le calculateur 12 vérifie que la recharge prévue à la station d'arrivée est effective, grâce par exemple à l'évolution de la mesure de l'énergie stockées par les batteries 4.

Dans l'affirmative, le calculateur 12 stoppe le délestage des dispositifs auxiliaires si un tel délestage était engagé, et réinitialise les consignes de vitesse.

Les étapes 110 à 180 sont exécutées à nouveau (boucle 103) sur l'interstation suivante.

Au contraire, si le calculateur 12 détecte un arrêt en station et une absence de recharge effective, il met à jour l'énergie provisionnelle totale en fonction du besoin sur la nouvelle interstation et il fait évoluer le calcul de l'énergie disponible embarquée en y incluant l'énergie de réserve, qu'il est prévu d'utiliser pour ce cas de figure.

Dans une variante de réalisation, au lieu de mesurer l'énergie embarquée, il est envisagé de la calculer sur les mêmes principes de calcul que ceux de l'énergie prévisionnelle totale. Cette variante peut avantageusement palier à des imprécisions de la mesure de l'énergie embraquée par le système de stockage d'énergie.

Dans un second mode de réalisation, le calcul de l'optimum vitesse-puissance auxiliaire peut se faire avec un priorisation spécifique, suivant les préférences de l'exploitant, par exemple avec en premier le confort et en deuxième le temps de parcours.

Dans une variante où le tramway est propre à récupérer l'énergie lors d'un freinage, cette énergie récupérée peut être stockée dans les batteries, et il est tenu compte de l'énergie récupérée dans la détermination de l'énergie disponible embarquée.

Cette énergie récupérée peut être utilisée directement pour alimenter les dispositifs auxiliaires. II est alors tenu compte de l'énergie récupérée dans l'estimation de l'énergie prévisionnelle totale Eₘᵢₛ₋ₚᵣₑᵥ(X).

Ces calculs se feront en prenant en compte le rendement de récupération de cette énergie de freinage, ainsi que le rendement de la partie traction et le rendement de la partie stockage et en prenant en compte l'absence de récupération en dessous d'une vitesse seuil qui vaut par exemple 13 km/h.

## Revendications

1. Procédé (100) de gestion automatique de l'énergie embarquée par un tramway (2) pour une mission de transport sur une interstation entre une station de recharge de départ et une station de recharge d'arrivée, comportant les étapes consistant à :
- fournir (110) des caractéristiques prédéterminées relatives à la mission, les caractéristiques prédéterminées comprenant un profil de vitesses de référence;
- évaluer (132, 134) une position et une vitesse courantes du tramway ;
- estimer (135, 136) une vitesse de croisière du tramway sur une route restant à parcourir pour atteindre la station de recharge d'arrivée, en fonction du profil de vitesses de référence, de la vitesse courante et de la position courante ;
- calculer (140) une énergie prévisionnelle totale (Eₘᵢₛ₋ₚᵣₑᵥ) en tant qu'estimation de l'énergie à consommer pour atteindre la station de recharge d'arrivée, en fonction de la position courante, de la vitesse de croisière estimée et d'une puissance auxiliaire (Pₐᵤₓ) fournie à des dispositifs auxiliaires de confort de passagers du tramway ;
- déterminer (144) une énergie embarquée disponible (E_{emb-dis}) en tant qu'énergie stockée par un système de stockage d'énergie (4) du tramway à la position courante ;
- afficher (150) sur un écran (30) l'énergie prévisionnelle totale et l'énergie embarquée disponible,
- comparer (160) l'énergie embarquée disponible (E_{emb-dis}) et l'énergie prévisionnelle totale (Eₘᵢₛ₋ₚᵣₑᵥ), et,
- lorsque l'énergie prévisionnelle totale est supérieure à l'énergie embarquée disponible, identifier (170) un optimum vitesse - puissance auxiliaire permettant d'atteindre la station d'arrivée, l'optimum vitesse - puissance auxiliaire étant identifié de manière à permettre d'abord de gagner la station d'arrivée, puis de gagner la station d'arrivée selon une heure d'arrivée prédéterminée, et enfin de gagner la station d'arrivée avec un niveau de confort prédéterminé.

2. Procédé selon la revendication 1, dans lequel l'optimum vitesse-puissance auxiliaire est appliqué en tant que consigne à un système de régulation de la vitesse et/ou à un système de régulation de la puissance auxiliaire.

3. Procédé selon l'une quelconque des revendications 1 à 2, dans lequel l'interstation comprend une pluralité de tronçons et le calcul de l'énergie prévisionnelle totale (Eₘᵢₛ₋ₚᵣₑᵥ) est effectué en prévoyant une vitesse de croisière sur chaque tronçon (i) de l'interstation restant à parcourir et en prévoyant une puissance auxiliaire (Pₐᵤₓ) courante fournies aux dispositifs auxiliaires de confort des passagers en tant que puissance auxiliaire sur les tronçons de l'interstation restant à parcourir et en prévoyant un temps de parcours des tronçons de l'interstation restant à parcourir.

4. Procédé selon l'une quelconque des revendications 1 à 3, dans lequel l'interstation comprend une pluralité de tronçons et le calcul de l'énergie prévisionnelle totale (Eₘᵢₛ₋ₚᵣₑᵥ) est effectué, en outre, en utilisant un profil d'altitude sur les tronçons de l'interstation restant à parcourir.

5. Procédé selon la revendication 3, dans lequel la prévision de la puissance auxiliaire est effectuée en utilisant le temps de parcours et une mesure moyennée de la puissance auxiliaire.

6. Procédé selon la revendication 3 ou 5, dans lequel le calcul de l'énergie prévisionnelle totale (Eₘᵢₛ₋ₚᵣₑᵥ) est effectué, en outre, en utilisant les vitesses de croisières prévues et des écarts de vitesse, en différenciant des accélérations et des décélérations du tramway.

7. Procédé selon l'une quelconque des revendications 1 à 6, dans lequel le calcul de l'énergie disponible embarquée (E_{emb-disp}) est effectué à partir d'une énergie embarquée par le système de stockage à l'instant courant de laquelle est soustraite une énergie de réserve, définie comme l'énergie nécessaire pour franchir une interstation suivante.

8. Système (10) de gestion automatique de l'énergie embarquée par un tramway (2), le système étant embarqué à bord du tramway, **caractérisé en ce qu'**il est propre à mettre en œuvre un procédé conforme à l'une quelconque des revendications 1 à 7.

## Patentansprüche

1. Verfahren (100) zur automatischen Verwaltung der von einer Straßenbahn (2) mitgeführten Energie für einen Transportauftrag auf einer Zwischenstation zwischen einer Start-Aufladestation und einer Ankunfts-Aufladestation, die Schritte aufweisend, die darin bestehen:
- vorbestimmte Kenndaten bezüglich des Auftrags zu liefern (100), wobei die vorbestimmten Kenndaten ein Referenzgeschwindigkeitsprofil umfassen;
- eine aktuelle Position und eine aktuelle Geschwindigkeit der Straßenbahn zu ermitteln (132, 134);
- eine Fahrtgeschwindigkeit der Straßenbahn auf einer Route, die durchfahren werden muss, um die Ankunfts-Aufladestation zu erreichen, abhängig von dem Referenzgeschwindigkeitsprofil, der aktuellen Geschwindigkeit und der aktuellen Position zu schätzen (135, 136);
- eine vorausschauende Gesamtenergie (Eₘᵢₛ₋ₚᵣₑᵥ) als Schätzung der zu verbrauchenden Energie, um die Ankunfts-Aufladestation zu erreichen, abhängig von der aktuellen Position, der geschätzten Fahrtgeschwindigkeit und einer Hilfsleistung (Pₐᵤₓ), die an Hilfsvorrichtungen für den Komfort der Fahrgäste der Straßenbahn geliefert wird, zu berechnen;
- eine verfügbare mitgeführte Energie (E_{emb-dis}) als von einem Energiespeichersystem (4) der Straßenbahn gespeicherte Energie an der aktuellen Position zu bestimmen;
- auf einem Bildschirm (30) die vorausschauende Gesamtenergie und die verfügbare mitgeführte Energie anzuzeigen,
- die verfügbare mitgeführte Energie (E_{emb-dis}) und die vorausschauende Gesamtenergie (Eₘᵢₛ₋ₚᵣₑᵥ) zu vergleichen und wenn die vorausschauende Gesamtenergie größer als die verfügbare mitgeführte Energie ist, ein Optimum Geschwindigkeit-Hilfsleistung zu identifizieren, die ermöglicht, die Ankunftsstation zu erreichen, wobei das Optimum Geschwindigkeit-Hilfeleistung derart identifiziert wird, dass zuerst die Ankunftsstation erreicht werden kann, dann die Ankunftsstation gemäß einer vorbestimmten Ankunftszeit erreicht werden kann und schließlich die Ankunftsstation mit einem vorbestimmten Niveau an Komfort erreicht werden kann.

2. Verfahren nach Anspruch 1, bei dem das Optimum Geschwindigkeit-Hilfsleistung als Sollwert einem Regelsystem der Geschwindigkeit und/oder einem Regelsystem der Hilfsleistung zugeführt wird.

3. Verfahren nach einem beliebigen der Ansprüche 1 bis 2, bei dem die Zwischenstation eine Mehrzahl von Abschnitten umfasst und die Berechnung der vorausschauenden Gesamtenergie (Eₘᵢₛ₋ₚᵣₑᵥ) durch Vorhersehen einer Fahrtgeschwindigkeit auf jedem noch zu durchfahrenden Abschnitt (i) der Zwischenstation und durch Vorhersehen einer aktuellen Hilfsleistung (Pₐᵤₓ), die den Hilfsvorrichtungen für den Fahrgastkomfort als Hilfsleistung auf den noch zu durchfahrenden Abschnitten der Zwischenstation geliefert wird, und durch Vorhersehen einer Fahrtzeit für die noch zu durchfahrenden Abschnitte der Zwischenstation durchgeführt wird.

4. Verfahren nach einem beliebigen der Ansprüche 1 bis 3, bei dem die Zwischenstation eine Mehrzahl von Abschnitten umfasst und die Berechnung der vorausschauenden Gesamtenergie (Eₘᵢₛ₋ₚᵣₑᵥ) außerdem unter Verwendung eines Höhenprofils der noch zu durchfahrenden Abschnitte der Zwischenstation durchgeführt wird.

5. Verfahren nach Anspruch 3, bei dem das Vorhersehen der Hilfsleistung unter Verwendung der Fahrtzeit und einem durchschnittlichen Maß der Hilfsleistung durchgeführt wird.

6. Verfahren nach Anspruch 3 oder 4, bei dem die Berechnung der vorausschauenden Gesamtenergie(Eₘᵢₛ₋ₚᵣₑᵥ) außerdem unter Verwendung der vorhergesagten Fahrtgeschwindigkeiten und der Abweichungen der Geschwindigkeit durchgeführt wird, wobei die Beschleunigungen und Verzögerungen der Straßenbahn differenziert werden.

7. Verfahren nach einem beliebigen der Ansprüche 1 bis 6, bei dem die Berechnung der mitgeführten verfügbaren Energie(E_{emb-dis}) ausgehend von einer von dem Speichersystem zum aktuellen Zeitpunkt mitgeführten Energie, von der eine Reserveenergie subtrahiert wird, die als notwendige Energie zum Überfahren einer folgenden Zwischenstation definiert ist, durchgeführt wird.

8. System (10) zur automatischen Verwaltung der von einer Straßenbahn (2) mitgeführten Energie, wobei das System an Bord der Straßenbahn mitgeführt wird, **dadurch gekennzeichnet, dass** es geeignet ist, ein Verfahren nach einem beliebigen der Ansprüche 1 bis 7 durchzuführen.

## Claims

1. A method (100) for managing automatically the energy stored by a tramway (2) for a transport mission over an interstation between a departure recharge station and an arrival recharge station, including the following steps:
- providing (110) predetermined characteristics relative to the mission, the predetermined characteristics comprising a reference speed profile;
- evaluating (132, 134) a current position and speed of the tramway;
- estimating (135, 136) a cruising speed of the tramway over the segments remaining to be traveled, based on the reference speed profile, the current speed and the current position;
- calculating (140) a total anticipated energy (Eₘᵢₛ₋ₚᵣₑᵥ) as an estimate of the energy to be consumed to reach the arrival recharge station, based on the current position, the estimated cruising speed and an auxiliary power (Pₐᵤₓ) supplied to auxiliary passenger comfort devices of the tramway;
- determining (144) an available stored energy (E_{emb-dis}) as energy stored by an energy storage system (4) of the tramway in the current position;
- displaying (150), on a screen (30), the total anticipated energy and the available stored energy,
- comparing (160) the available stored energy (E_{emb-dis}) and the total anticipated energy (Eₘᵢₛ₋ₚᵣₑᵥ), and,
- when the total anticipated energy is greater than the available stored energy, identifying (170) a speed - auxiliary power optimum making it possible to reach the arrival station, the speed - auxiliary power optimum being identified so as first to make it possible to reach the arrival station, then to reach the arrival station at a predetermined arrival time, and lastly to reach the arrival station with a predetermined comfort level.

2. The method according to claim 1, wherein the speed-auxiliary power optimum is applied as input to a system for regulating the speed and/or a system for regulating the auxiliary power.

3. The method according to any one of claims 1 to 2, wherein the interstation is made up of a plurality of segments and the calculation of the total anticipated energy (Eₘᵢₛ₋ₚᵣₑᵥ) is done by providing a cruising speed on each segment (i) of the interstation remaining to be traveled and by providing a current auxiliary power (Pₐᵤₓ) supplied to the auxiliary passenger comfort devices as auxiliary power on the segments of the interstation remaining to be traveled and by providing a travel time for the segments of the interstation remaining to be traveled.

4. The method according to any one of claims 1 to 3, wherein the calculation of the total anticipated energy (Eₘᵢₛ₋ₚᵣₑᵥ) is further done by using an altitude profile over the segments of the interstation remaining to be traveled.

5. The method according to claim 3, wherein the forecast of the auxiliary power is done by using the travel time and an averaged measurement of the auxiliary power.

6. The method according to claim 3 or 4, wherein the calculation of the total anticipated energy (Eₘᵢₛ₋ₚᵣₑᵥ) is further done by using the anticipated cruising speeds and speed deviations, by differentiating between accelerations and decelerations of the electric vehicle.

7. The method according to any one of claims 1 to 6, wherein the calculation of the stored available energy (E_{emb-disp}) is done from an energy stored by the storage system at the current moment, from which a reserve energy is subtracted, defined as the energy needed to cross the following intersection.

8. A system (10) for automatically managing energy stored by an electric vehicle (2), the system being stored on board the electric vehicle, **characterized in that** it is capable of carrying out the method according to any one of claims 1 to 7.
